(19) Europäisches Patentamt
European Patent Office
Office européen des brevets

(11) EP 4 797 149 A1

(12) **EUROPÄISCHE PATENTANMELDUNG**

(43) Veröffentlichungstag:
**26.08.2026 Patentblatt 2026/35**

(21) Anmeldenummer: **26159238.0**

(22) Anmeldetag: **18.02.2026**

(51) Internationale Patentklassifikation (IPC):
***G06K 7/14*** *(2006.01)* *G06K 7/10* *(2006.01)*

(52) Gemeinsame Patentklassifikation (CPC):
**G06K 7/1482;** G06K 7/10554; G06K 7/10851

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **20.02.2025 DE 202025100910 U**

(71) Anmelder: **Leuze electronic GmbH + Co. KG**
**73277 Owen/Teck (DE)**

(72) Erfinder:
- **Sanzi, Janina**
  **73230 Kirchheim unter Teck (DE)**
- **Knöffel, Thomas**
  **73230 Kirchheim unter Teck (DE)**
- **Sanzi, Dr., Friedrich**
  **73230 Kirchheim/Teck (DE)**

(74) Vertreter: **Ruckh, Rainer Gerhard**
**Patentanwaltskanzlei Ruckh**
**Jurastraße 1**
**73087 Bad Boll (DE)**

(54) **CODELESER**

(57) Die Erfindung betrifft einen zur Erfassung von Barcodes (7) ausgebildeten Codeleser (1) mit einer Lichtstrahlen (2) emittierenden Sendereinheit und einer Empfängereinheit. Mit den von der Sendereinheit emittierten Lichtstrahlen (2) wird wenigstens ein Barcode (7) abgetastet. Die vom Barcode (7) reflektierten Lichtstrahlen (2) werden zur Empfängereinheit geführt, wobei dadurch generierte Empfangssignale in einer Auswerteeinheit zur Dekodierung des Barcodes (7) ausgewertet werden. Die Auswerteeinheit weist wenigstens ein neuronales Netz (13) auf, mittels dessen eine Differentiation des Empfangssignals durchgeführt wird. Anhand des differenzierten Empfangssignals wird der Barcode (7) detektiert.

Fig. 1

5
D
7
A
2
6
4
3

EP 4 797 149 A1

## Beschreibung

Die Erfindung betrifft einen Codeleser zur Erfassung von Barcodes.

Zur Erfassung derartiger Barcodes, die generell aus einer alternierenden Folge von hellen und dunklen Codeelementen bestehen, werden typischerweise Codeleser eingesetzt, die in Form von Barcodescannern ausgebildet sind. Ein derartiger Codeleser weist einen Sendelichtstrahlen emittierenden Sender und eine diesem nachgeordnete Ablenkeinheit auf. Mittels der Ablenkeinheit werden die Sendelichtstrahlen so abgelenkt, dass sie periodisch innerhalb jeweils eines Scans einen Abtastbereich abtasten. Von einem innerhalb des Abtastbereichs angeordneten Barcode werden die Sendelichtstrahlen reflektiert und als Empfangslichtstrahlen zum Empfänger geführt. Die Empfangslichtstrahlen und entsprechend die am Ausgang des Empfängers anstehenden Empfangssignale weisen dabei entsprechend dem Kontrastmuster des Barcodes eine Amplitudenmodulation auf. In einer Auswerteeinheit des Codelesers wird die Amplitudenmodulation der Empfangssignale ausgewertet und der Barcode dekodiert.

Für eine Dekodierung des Barcodes müssen die Breiten der einzelnen Codeelemente dieses Barcodes bestimmt werden. Dies bedeutet, dass anhand des Empfangssignals die Übergänge zwischen den hellen und dunklen Codeelementen möglichst genau bestimmt werden müssen.

Hierzu wird bei bekannten Codelesern das Empfangssignal differenziert und dann, für jeden Scan, der differenzierte zeitliche Empfangssignalverlauf ausgewertet. Zur Ermittlung der Hell-/ Dunkelübergänge wird dann das differenzierte Empfangssignal mit zwei Schwellwerten bewertet. Mit einem positiven Schwellwert werden die Maxima des Empfangssignalverlaufs bestimmt, wobei ein Maximum vorliegt, wenn das lokale Maximum des differenzierten Empfangssignals größer als der positive Schwellwert ist. Mit einem negativen Schwellwert werden die Minima des Empfangssignalverlaufs bestimmt, wobei ein Minimum vorliegt, wenn das lokale Minimum des differenzierten Empfangssignals kleiner als der negative Schwellwert ist.

Ein Problem bei diesem Auswerteverfahren besteht darin, dass dieses voraussetzt, dass die Barcodes in einem festen Leseabstand zum Codeleser angeordnet sind und die Sendelichtstrahlen so fokussiert sind, dass in dem Leseabstand der Durchmesser der Sendelichtstrahlen kleiner ist als die Breiten der Codeelemente der Barcodes.

Oft besteht jedoch eine Anforderung in einem Codeleser, dass dieser Barcodes in einem großen Tiefenschärfenbereich, das heißt in einem großen Abstandsbereich zum Codeleser, erkennen kann. Innerhalb dieses Tiefenschärfenbereichs variiert die Fokussierung der Sendelichtstrahlen, so dass in bestimmten Abstandsbereichen der Durchmesser der Sendelichtstrahlen größer ist als die Breiten der Codeelemente. In diesem Fall ist der differenzierte Empfangssignalverlauf nicht mehr symmetrisch zur Nulllinie, das heißt es können insbesondere Minima mit positiven Werten auftreten. Diese können mit den negativen Schwellwerten, die zur Minimalbestimmung eingesetzt werden, nicht mehr erfasst werden. Damit ist eine Erfassung und Dekodierung der Barcodes nicht mehr möglich.

Die EP 3 312 761 B1 betrifft ein Verfahren zur Erfassung von Barcodes mittels eines Codelesers, welcher einen Sendelichtstrahlen emittierenden Sender, eine Ablenkeinheit und einen Empfänger, auf welchen als Empfangslichtstrahlen von einem Barcode zurückreflektierte Sendelichtstrahlen auftreffen, aufweist. Mittels der Ablenkeinheit tasten die Sendelichtstrahlen periodisch innerhalb jeweils eines Scans einen Abtastbereich ab. Der Codeleser weist eine Auswerteeinheit auf, die dadurch gekennzeichnet ist, dass in der Auswerteeinheit zur Erfassung von Barcodes Empfangssignale am Ausgang des Empfängers gemäß den folgenden Verfahrensschritten ausgewertet werden.

- Bildung des differenzierten zeitlichen Empfangssignalverlaufs für jeden Scan,
- Bestimmen von gültigen Paaren von jeweils einem Minimum und einem auf diesem folgenden Maximum innerhalb des Empfangssignalverlaufs eines Scans,

- wobei bei einer Suche nach einem Minimum aufeinanderfolgende Empfangssignalwerte verglichen werden und der aktuelle Empfangssignalwert als aktuelles Minimum übernommen wird, wenn er kleiner als der vorherige Empfangssignalwert ist, und wobei ein aktueller Schwellwert $S_{min}$ aus der Summe des aktuellen Minimums und einer Schwelle $\delta_0$, die als Anfangswert vorgegeben ist, berechnet wird, wobei die Suche nach dem Minimum beendet wird, wenn der aktuelle Empfangssignalwert oberhalb des zuvor bestimmten aktuellen Schwellwerts $S_{min}$ liegt und darauf das aktuelle Minimum als gültiges Minimum gespeichert wird und darauf eine Suche nach einem Maximum gestartet wird, und wobei bei einer Suche nach einem Maximum aufeinanderfolgende Empfangssignalwerte verglichen werden und der aktuelle Empfangssignalwert als aktuelles Maximum übernommen wird, wenn er größer als der vorige Empfangssignalwert ist, und wobei ein aktueller Schwellwert $S_{max}$ aus der Differenz des aktuellen Maximums und der oder einer weiteren Schwelle $\delta_0$, berechnet ist, wobei die Suche nach dem Maximum beendet wird, wenn der aktuelle Empfangssignalwert unterhalb des zuvor bestimmten aktuellen Schwellwerts liegt, und danach das aktuelle Maximum als gültiges Maximum gespeichert wird und darauf die Suche nach einem Minimum gestartet wird,
- Ermitteln wenigstens einer geänderten Schwelle $\delta$ aus den abgespeicherten gültigen Minima und Maxima dieses Scans, wobei die geänderte Schwelle $\delta$ als bestimmter Bruchteil des Betrags eines ausgewählten Extremwerts definiert ist und wobei deren Wert betragsmäßig größer als deren Anfangswert ist,

- Bestimmen von endgültigen Paaren von jeweils aufeinanderfolgenden Paaren von Minima und Maxima, indem für die gespeicherten gültigen Paare von Minima und Maxima des Scans die Suche nach Minima und Maxima mit der geänderten Schwelle $\delta$ wiederholt wird.
- Dekodieren des Barcodes anhand der ermittelten endgültigen Paare von Minima und Maxima für den jeweiligen Scan und eines daraus abgeleiteten digitalen Empfangssignals, welches die Kodierung der Codeelemente des Barcodes enthält.

Bei diesem Verfahren wird das differenzierte Empfangssignal, das die Informationen über einen mit dem Codeleser gelesenen Barcode enthält, nicht mit festen Schwellwerten, sondern mit adaptiven, vom Verlauf des differenzierten Empfangssignals abhängigen Schwellwerten zu bewerten. Durch diese fortlaufende Anpassung der Schwellwerte können Barcodes in einem großen Tiefenschärfenbereich erkannt werden, wodurch der Einsatzbereich des Codelesers erheblich erweitert wird.

Voraussetzung für eine fehlerfreie Erkennung von Barcodes ist auch in diesem Fall eine fehlerfreie, verzerrungsfreie Differentiation des Empfangssignals des Codelesers, bei der die Codeinformationen von gelesenen Barcodes vollständig wiedergegeben werden.

Der Erfindung liegt die Aufgabe zugrunde einen Codeleser mit hoher Funktionalität bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen zur Erfassung von Barcodes ausgebildeten Codeleser mit einer Lichtstrahlen emittierenden Sendereinheit und einer Empfängereinheit. Mit den von der Sendereinheit emittierten Lichtstrahlen wird wenigstens ein Barcode abgetastet. Die vom Barcode reflektierten Lichtstrahlen werden zur Empfängereinheit geführt, wobei dadurch generierte Empfangssignale in einer Auswerteeinheit zur Dekodierung des Barcodes ausgewertet werden. Die Auswerteeinheit weist wenigstens ein neuronales Netz auf, mittels dessen eine Differentiation des Empfangssignals durchgeführt wird. Anhand des differenzierten Empfangssignals wird der Barcode detektiert.

Mit dem neuronalen Netz wird eine exakte Differentiation des Empfangssignals des Codelesers ermöglicht, bei dem die darin enthaltenen Codeinformationen vollständig erhalten sind, was eine wesentliche Voraussetzung für eine fehlerfreie Dekodierung des Barcodes anhand dessen differenzierten Empfangssignals ist.

Durch ein entsprechendes Training des neuronalen Netzes kann dieses optimal an die jeweiligen Einsatzbedingungen des Codelesers angepasst werden.

Ein weiterer wesentlicher Vorteil besteht in der Filtereigenschaft des neuronalen Netzes. Dadurch können Störungen, insbesondere Verzerrungen des Empfangssignals minimiert werden.

Weiterhin ist vorteilhaft, dass mit dem neuronalen Netz eine Filterübertragungsfunktion mit linearer Phase realisiert wird.

Damit werden Verzerrungen des Empfangssignals, wie sie bei Filtern mit Filterübertragungsfunktion mit nichtlinearer Phase erhalten werden, vermieden. Bei einer Filterübertragungsfunktion mit linearer Phase entsteht lediglich eine unkritische zeitliche Verschiebung des Empfangssignals.

Schließlich kann das neuronale Netz in einer Sub-Prozessstruktur realisiert sein.

Dasselbe gilt für die neuronalen Netzen zugeordneten Einheiten. Damit wird eine effiziente Umsetzung des Systems mit dem neuronalen Netz in eine optimierte Hardwarestruktur realisiert.

Gemäß einer vorteilhaften Ausführungsform wird mittels des neuronalen Netzes eine Abtasterhöhung durchgeführt.

Damit ist die Funktionalität des neuronalen Netzes erhöht, indem mit diesem zusätzlich zur Differentiation des Empfangssignals eine Erhöhung der Abtastrate für das Empfangssignal durchgeführt wird, wodurch dessen zeitliche Auflösung erhöht wird. Dadurch können insbesondere die Extremwerte des differenzierten Empfangssignals genauer bestimmt werden. Anhand des so gewonnenen differenzierten Empfangssignals wird eine noch weiter verbesserte Dekodierung des Barcodes ermöglicht.

Das an der Empfängereinheit anstehende analoge Empfangssignal, das die Codeinformationen eines gelesenen Barcodes enthält, wird in einem Analog-Digital-Wandler digitalisiert. Die Abtastratenerhöhung wird an dem so gewonnenen digitalisierten Empfangssignal durchgeführt.

Das digitalisierte Empfangssignal enthält in Form von diskreten Signalwerten den zeitlichen bzw. räumlichen Verlauf des Empfangssignals, das die Codeinformation eines gelesenen Barcodes enthält.

Die Abtastratenerhöhung erfolgt derart, dass zwischen benachbarten diskreten Signalwerten weitere Werte eingefügt werden, so dass mit diesen eine Interpolation zwischen den beiden Signalwerten erfolgt.

Dies kann dadurch erfolgen, dass das neuronale Netz einen Dense-Layer aufweist.

Weiterhin ist es möglich, dass dem neuronalen Netz ein Abtasterhöhungsmodul vorgeordnet ist.

Mit dem Abtasterhöhungsmodul wird eine Abtasterhöhung um den Faktor M bewirkt, indem zwischen jeweils zwei aufeinanderfolgenden Abtastwerten des Empfangssignals M-1 Nullen eingefügt werden.

Dann werden zur Bestimmung von Parametern des neuronalen Netzes während eines Trainings die Signale am

Ausgang des Abtasterhöhungsmoduls als Eingangssignale und die Ableitung dieses Signals als gewünschte Ausgangssignale vorgegeben.

Für den Fall, dass kein Abtasterhöhungsmodul vorhanden ist und die Abtastratenerhöhung mit dem Dense-Layer des neuronalen Netzes durchgeführt wird, werden für das Training des neuronalen Netzes digitalisierte Empfangssignale als Eingangssignale und die Ableitung der digitalisierten Empfangssignale als gewünschte Ausgangssignale vorgegeben.

Dabei ist es zweckmäßig, wenn für das Training des neuronalen Netzes die Empfangssignale mit einem Tiefpasssignal beschrieben werden.

Zudem wird zu dem Tiefpasssignal ein Rauschsignal addiert.

Gemäß einer vorteilhaften Weiterbildung ist dem neuronalen Netz ein Verzerrungsfilter vorgeordnet.

Für den Fall, dass ein Abtasterhöhungsmodul vorhanden ist, ist der Verzerrungsfilter dem neuronalen Netz und dem Abtasterhöhungsmodul vorgeordnet.

Mit dem Verzerrungsfilter können Verzerrungen im Empfangssignal weiter reduziert werden.

Vorteilhaft ist der Verzerrungsfilter ein Tiefpassfilter.

Die Grenzfrequenz des Tiefpassfilters ist an die Grenzfrequenz der Empfangssignale angepasst. Vorzugsweise ist die Grenzfrequenz des Tiefpassfilters geringer als die Grenzfrequenz des Empfangssignals.

Gemäß einer ersten Ausgestaltung ist der Codeleser als Scanner ausgebildet. In diesem Fall weist der Codeleser eine Ablenkeinheit auf, mittels derer die Lichtstrahlen periodisch innerhalb eines Abtastbereichs geführt sind.

Bei dieser Ausführungsform ist im zeitlichen Verlauf des Empfangssignals die Codeinformation eines gelesenen Barcodes enthalten.

Gemäß einer zweiten Ausgestaltung ist der Codeleser als Kamerasensor ausgebildet. In diesem Fall weist dieser einen Bildsensor auf, der zur Aufnahme von Bildern der Barcodes ausgebildet ist.

Bei dieser Ausführungsform ist im räumlichen Verlauf des Empfangssignals die Codeinformation des gelesenen Barcodes enthalten.

Die Dekodierung eines gelesenen Barcodes erfolgt derart, dass mit dem differenzierten Empfangssignal am Ausgang des neuronalen Netzes eine Kantendetektion durchgeführt wird. Anhand der ermittelten Kanten erfolgt die Dekodierung des Barcodes. Hierzu wird vorteilhaft das in der EP 3 312 761 B1 beschriebene Verfahren eingesetzt.

Die Erfindung wird im Folgenden anhand der Zeichnungen erläutert. Es zeigen:

Figur 1: Darstellung von optischen Komponenten eines ersten Ausführungsbeispiels des erfindungsgemäßen Codelesers.

Figur 2: Darstellung von optischen Komponenten eines zweiten Ausführungsbeispiels des erfindungsgemäßen Codelesers.

Figur 3: Blockschaltbild des erfindungsgemäßen Codelesers mit einer ersten Ausführungsform der Auswerteeinheit.

Figur 4a: Zeitlicher Verlauf von Signalen am Eingang eines Abtasterhöhungsmoduls der Auswerteeinheit gemäß Figur 3.

Figur 4b: Zeitlicher Verlauf von Signalen am Ausgang eines Abtasterhöhungsmoduls der Auswerteeinheit gemäß Figur 3.

Figur 5a: Zeitliche Ableitung des Empfangssignals vor dem Abtasterhöhungsmodul der Auswerteeinheit gemäß Figur 2.

Figur 5b: Zeitliche Ableitung des Empfangssignals am Ausgang des neuronalen Netzes der Auswerteeinheit gemäß Figur 2.

Figur 6: Blockschaltbild des erfindungsgemäßen Codelesers mit einer zweiten Ausführungsform der Auswerteeinheit.

Figur 7: Zeitdiagramm der Ableitung von Empfangssignalen am Ausgang des neuronalen Netzes für die Auswerteeinheit der Figuren 3 und 6.

Figur 8: Blockschaltbild des erfindungsgemäßen Codelesers mit einer dritten Ausführungsform der Auswerteeinheit.

Figur 9: Netzstruktur des neuronalen Netzes der Auswerteeinheit gemäß Figur 8 für bestimmte Ein-/Ausgangswerte.

Figur 10: Netzstruktur des neuronalen Netzes der Auswerteeinheit gemäß Figur 8 für bestimmte Ausgangswerte.

Figur 11: Netzstruktur des neuronalen Netzes der Auswerteeinheit gemäß Figur 8 für bestimmte Ausgangswerte.

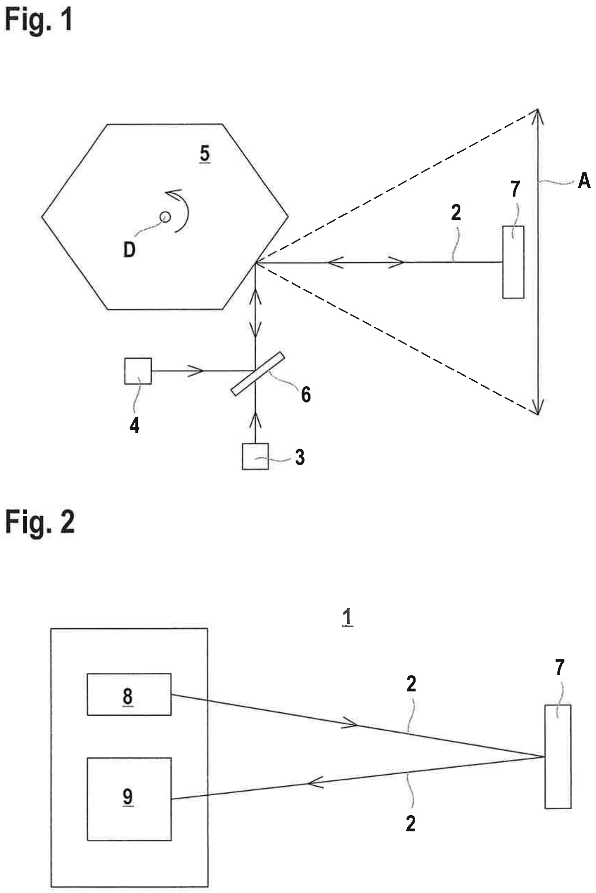

Figur 1 zeigt die optischen Komponenten eines ersten Ausführungsbeispiels des erfindungsgemäßen Codelesers 1.

Dieser Codeleser 1 weist als Sendereinheit einen Lichtstrahlen 2 emittierenden Sender 3 in Form einer Laserdiode auf. Weiterhin ist als Empfängereinheit ein Empfänger 4 in Form einer Photodiode vorhanden. Des Weiteren ist als Ablenkeinheit ein Polygonspiegelrad 5 vorhanden, das mittels eines Antriebs eine gleichförmige Drehbewegung um eine senkrecht zur Zeichenebene verlaufende Drehachse D ausführt. Die Lichtstrahlen 2 werden an Facetten des Polygonspiegelrads 5 reflektiert. Durch einen Strahlteilerspiegel 6 wird ein koaxialer Verlauf der vom Sender 3 emittierten Lichtstrahlen 2 und der zum Empfänger 4 geführten Lichtstrahlen 2 bewirkt.

Durch die Drehbewegung des Polygonspiegelrads 5 werden die Lichtstrahlen 2 zur Detektion von Barcodes 7 periodisch innerhalb eines Abtastbereichs A geführt. Die über einen Barcode 7 geführten Lichtstrahlen 2 werden über das Polygonspiegelrad 5 zurück zum Empfänger 4 geführt.

Figur 2 zeigt die optischen Komponenten eines zweiten Ausführungsbeispiels des erfindungsgemäßen Codelesers 1.

Dieser Codeleser 1 umfasst als Sendereinheit eine Lichtstrahlen 2 emittierende Beleuchtungseinheit 8 und als Empfängereinheit einen Bildsensor 9, der aus einem zeilen- oder matrixförmigen CCD- oder CMOS Array besteht.

In diesem Fall wird ein Barcode 7 dadurch erfasst, dass mit dem Bildsensor 9 ein Bild dieses Barcodes 7 aufgenommen wird.

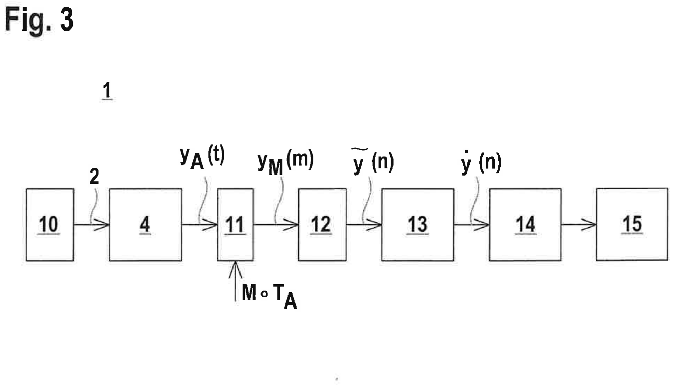

Figur 3 zeigt ein Blockschaltbild des Codelesers 1 gemäß Figur 1.

Ein Barcode 7 auf einem Objekt 10 wird mit den über das Polygonspiegelrad 5 geführten Lichtstrahlen 2 abgetastet. Der dadurch erhaltene zeitliche Verlauf der Empfangssignale $y_A(t)$ wird einem Analog-Digital-Wandler 11 zugeführt. Durch eine Abtastung der analogen Empfangssignale mit einer vorgegebenen Abtastrate (Abtastdauer $M \cdot T_A$) entsteht eine Folge von digitalisierten Empfangssignalen $y_M(m)$. In einem Abtasterhöhungsmodul 12 wird die Abtastrate um den Faktor M erhöht. Am Ausgang des Abtasterhöhungsmoduls 12 wird dadurch das Signal $\tilde{y}(n)$ erhalten, dass einem neuronalen Netz 13 zugeführt wird. Dort erfolgt eine Differentiation des Signals $\tilde{y}(n)$, wodurch das differenzierte Signal $\dot{y}(n)$ erhalten wird. Dieses wird einer Kantendetektionseinheit 14 zugeführt. Dort werden die Kantenlagen des differenzierten Signals $\dot{y}(n)$ erhalten. Anhand der ermittelten Kantenlagen erfolgt in einem Decoder 15 die Dekodierung des Barcodes 7. Die Dekodierung erfolgt, wie auch in den folgenden Ausführungsbeispielen, gemäß dem Verfahren der EP 3 312 761 B1.

Für das Training des neuronalen Netzes 13 wird folgender Ansatz für das Empfangssignal $y_A(t)$ gewählt.

$$y_A(t) = x_A(t) + n(t) \qquad 1)$$

mit

$$x_A(t) = \sqrt{\frac{2}{N}} \Sigma_{k=1}^{N} \cos(2 \cdot \pi \cdot f_k \cdot t + \varphi_k) \qquad 2)$$

In Gleichung (1) ist $x_A(t)$ ein Tiefpasssignal und n(t) ein additives Rauschsignal. Für das Tiefpasssignal $x_A(t)$ erfolgt die Auswahl der Frequenzen $f_k$ nach einer Wahrscheinlichkeitsdichtefunktion $p_f(f)$, welche proportional zur spektralen Intensität des Signals ist. Bei der Wahrscheinlichkeitsdichtefunktion $p_f(f)$ kann es sich z.B. um eine Gleichverteilung zwischen $-f_g$ und $f_g$ handeln, wobei $f_g$ die Grenzfrequenz ist. Dies entspricht einem idealen Tiefpasssignal mit rechteckförmigem Spektrum. Die Nullphasen $\varphi_k$ sind zwischen 0 und $2 \cdot \pi$ gleichverteilt. Um optische Aspekte zu berücksichtigen, kann die Wahrscheinlichkeitsdichtefunktion $p_f(f)$ auch eine andere Funktion sein, z.B. eine Gaußsche Wahrscheinlichkeitsdichtefunktion. Aus Gleichung (1) ergibt sich die erste Ableitung wie folgt:

$$y_a(t) = \dot{x}_A(t) + \dot{n}(t) \qquad 3)$$

mit

$$\dot{x}_A(t) = -2\cdot\pi\cdot K_1 \sqrt{\frac{2}{N}} \Sigma_{k=1}^{N} f_k\cdot\sin(2\cdot\pi\cdot f_k\cdot t+\varphi_k) \qquad 4)$$

Die Ableitung $\dot{n}(t)$ des Rauschens n(t) wird dabei nicht näher beschrieben.

$K_1$ in Gleichung (4) ist ein Normierungsfaktor. Im Digitalen ergeben sich die Gleichungen (1) bis (4) zu:

$$y(n) = x(n)+n(n) \qquad 5)$$

mit

$$x(n) = \sqrt{\frac{2}{N}} \Sigma_{k=1}^{N} \cos(2\cdot\pi\cdot\Omega_k\cdot n+\varphi_k) \qquad 6)$$

$$\dot{y}(n) = \dot{x}(n)+\dot{n}(n) \qquad 7)$$

mit

$$\dot{x}(n) = -2\cdot\pi\cdot\breve{K}_1\cdot \sqrt{\frac{2}{N}} \Sigma_{k=1}^{N} \Omega_k\cdot\sin(2\cdot\pi\cdot\Omega_k\cdot n+\varphi_k) \qquad 8)$$

In den Gleichungen (6) und (8) gilt $\Omega_k = f_k\cdot T_A$, wobei $T_A$ eine Ziel-Abtastperiode ist. Entsprechend zum Faktor $K_1$ dient der Faktor $\breve{K}_1$ zu Normierungszwecken. Das Signal nach dem Analog-Digital-Wandler 11 mit der Abtastperiode (Abtastdauer $M\cdot T_A$) bestimmt sich zu:

$$y_M(m) = y(M\cdot m) \qquad 9)$$

Im Abtasterhöhungsmodul 12 erfolgt eine Abtastratenerhöhung um den Faktor M. Hierzu werden zwischen zwei aufeinanderfolgenden Werten $y_M(m)$ und $y_M(m+1)$ M-1 Nullen eingefügt, wodurch das Signal $\tilde{y}(n)$ erhalten wird.

Das Signal nach der Abtastratenerhöhung ergibt sich zu:

$$\tilde{y}(n) = \begin{cases} y(n) & \text{für } n = M\cdot m \\ 0 & \text{sonst} \end{cases} \qquad (10)$$

Um das neuronale Netz 13 zu bestimmen, welches mit den im Abtasterhöhungsmodul 12 eingefügten Werten eine Interpolation durchführt und die erste Ableitung realisiert, werden die Signale $\tilde{y}(n)$ als Eingangssignal und $\dot{x}(n)$ als gewünschtes Ausgangssignal dem neuronalen Netz 13 zum Training übergeben.

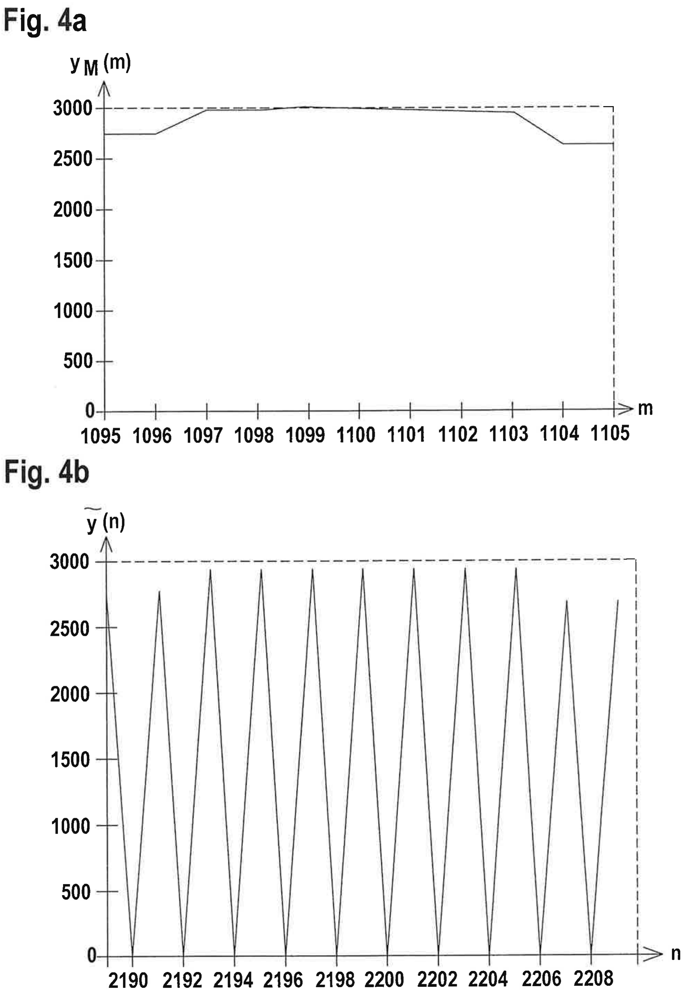

Figur 4a zeigt ausschnittsweise den Verlauf des Signals $y_M(m)$. Figur 4b zeigt ausschnittsweise den Verlauf des Signals $\tilde{y}(n)$. Dabei zeigen die Figuren 4a, 4b den Fall für M=2.

Wie Figur 4b zeigt, nimmt jeder zweite Wert des Signals $\tilde{y}(n)$ durch die Abtastratenerhöhung im Abtasterhöhungsmodul 12 den Wert Null an. Figur 4a zeigt das Signal $y_M(m)$ am Eingang des Abtasterhöhungsmoduls 12.

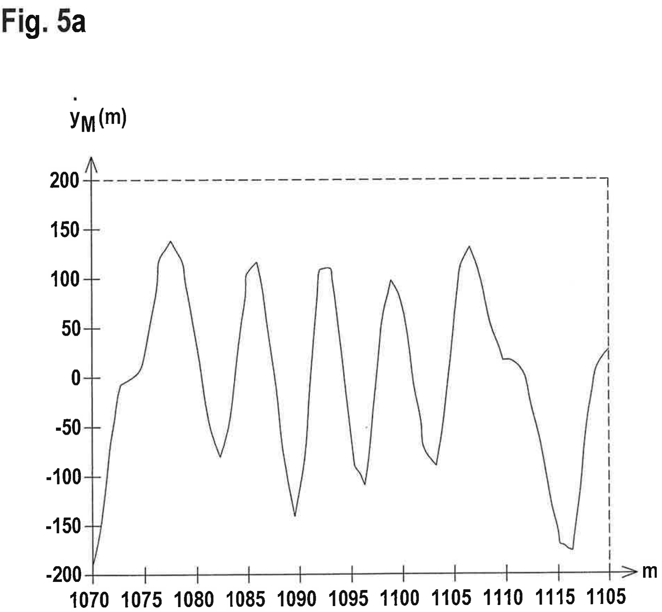

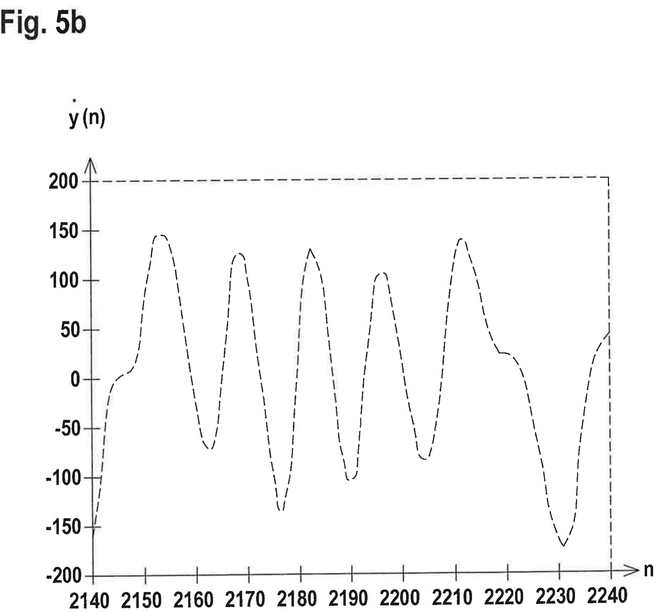

Figur 5b zeigt das differenzierte Empfangssignal $\dot{y}(n)$ am Ausgang des neuronalen Netzes 13. Im Vergleich hierzu zeigt Figur 5a das differenzierte Empfangssignal $\dot{y}_M(m)$ vor dem Abtasterhöhungsmodul 12.

Wie der Vergleich der Figuren 5a, 5b zeigt, weist das differenzierte Empfangssignal $\dot{y}(n)$ am Ausgang des neuronalen Netzes 13 (Figur 5b) eine höhere zeitliche Auflösung auf als das differenzierte Empfangssignal $\dot{y}_M(m)$ (Figur 5a).

Dadurch sind die Extremstellen im Signal $\dot{y}(n)$ exakter positioniert, so dass die Decodierung der Barcodeinformation in Grenzsituationen (Rundungseffekte in Algorithmen, Auflösung der Elementbreiten) verbessert wird.

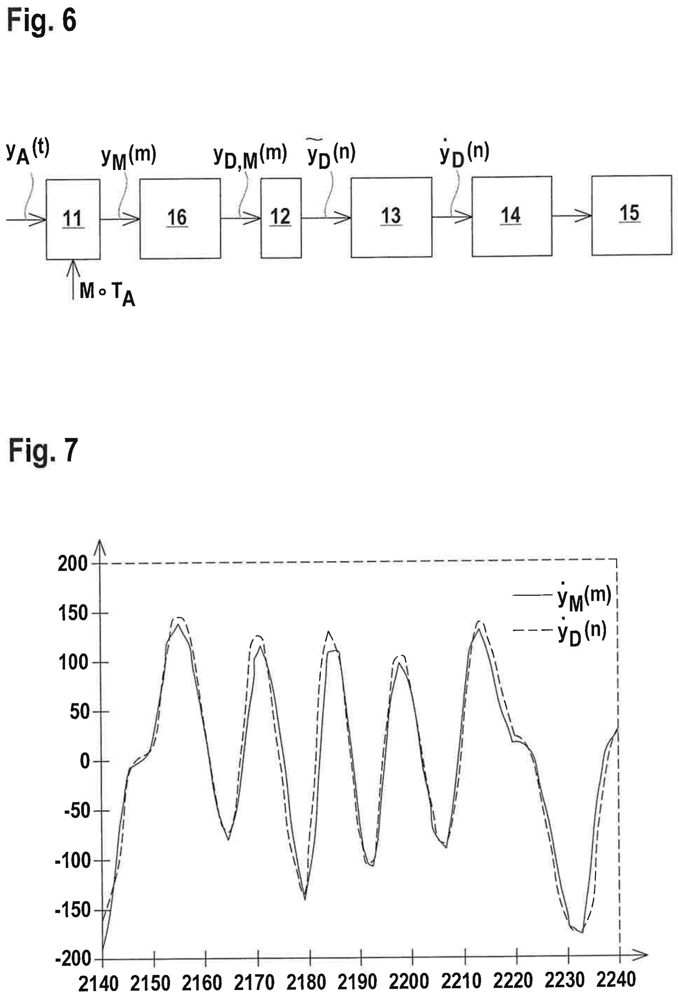

Die Figur 6 zeigt ein Blockschaltbild einer weiteren Ausführungsform des Codelesers 1. Diese unterscheidet sich von der Ausführungsform gemäß Figur 3 nur dadurch, dass zwischen dem Analog-Digital-Wandler 11 und dem Abtasterhöhungsmodul 12 ein Verzerrungsfilter 16 eingefügt ist.

Am Ausgang des Verzerrungsfilters 16 liegt das Signal $y_{D,M}(m)$ an. Am Ausgang des Abtasterhöhungsmoduls 12 liegt das Signal $\tilde{y}_D(n)$ an. Am Ausgang des neuronalen Netzes 13 liegt das differenzierte Empfangssignal $\dot{y}_D(n)$ an.

Mit dem Verzerrungsfilter 16 werden durch optische Effekte bedingte Verzerrungen des digitalisierten Emp-

fangssignals $y_M(m)$ reduziert.

Der Verzerrungsfilter 16 dient dabei nur als Gedankenmodul und entspricht keinem realen Block. Durch dieser Verzerrungsfilter 16 können durch optische Effekte bedingte Verzerrungen berücksichtigt werden, um deren Kompensation durch das neuronale Netz 13 zu ermöglichen.

Für das Training des neuronalen Netzes 13 werden die Signale $\tilde{y}_D(n)$ als Eingangssignal und $\dot{x}(n)$ als gewünschtes Ausgangssignal verwendet. Das Signal $\tilde{y}_D(n)$ bestimmt sich aus dem Signal $y_{D,M}(m)$ durch Abtastratenerhöhung. Das Signal $y_{D,M}(m)$ ist das Ausgangssignal des Verzerrungsfilter 16 mit Eingangssignal $y_M(m)$. Im einfachsten Fall stellt der Verzerrungsfilter 16 einen TiefpassFilter mit einer geringeren Grenzfrequenz $\Omega_{TP,M,g}$ als das Signal $x_M(m)$, welches sich aus dem Signal x(n) durch Heruntertaktung um M bestimmt und damit die Grenzfrequenz $\Omega_{M,g}=M\cdot f_g\cdot T_A$ besitzt, dar. Es gilt somit die Beziehung:

$$\Omega_{TP,M,g}<\Omega_{M,g} \tag{11}$$

In Figur 7 sind die Verläufe der Signale $\dot{y}(n)$ und $\dot{y}_D(n)$, d.h. das differenzierte Empfangssignal am Ausgang des neuronalen Netzes 13, dargestellt.

Wie dort zu erkennen, sind durch die Kompensation der Verzerrungen durch das neuronale Netz 13 die Extremstellen des differenzierten Empfangssignals angehoben. Dadurch erhöht sich der Signal-/Raumabstand und die nachfolgende Kantendetektion wird robuster.

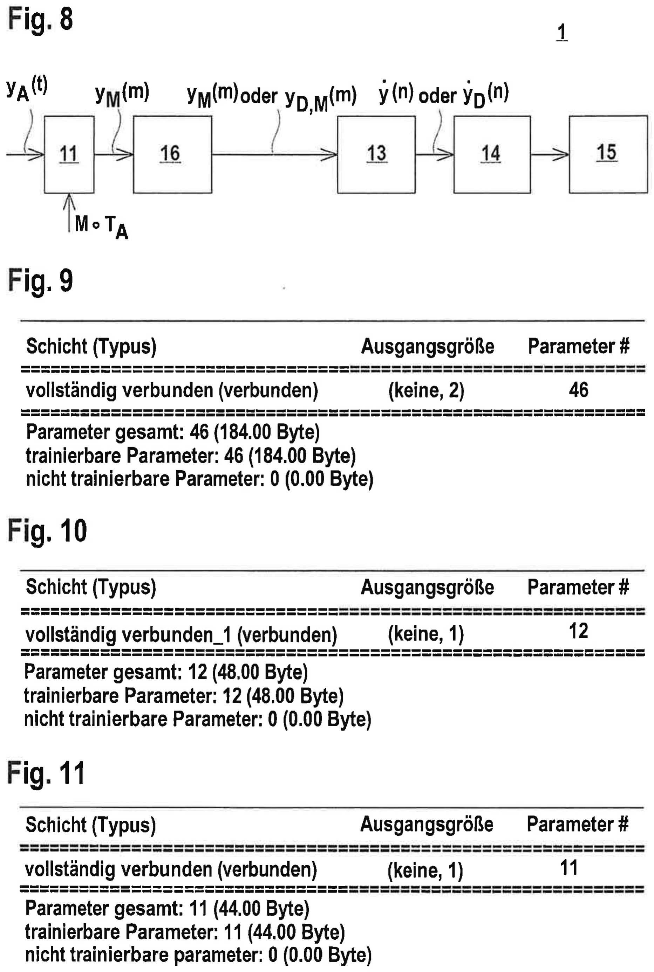

Figur 8 zeigt ein Blockschaltbild einer weiteren Ausführungsform des Codelesers 1. Diese unterscheidet sich von der Ausführungsform gemäß Figur 6 nur dadurch, dass das Abtasterhöhungsmodul 12 weggelassen ist. In diesem Fall wird mittels eines Dense-Layers des neuronalen Netzes 13 eine Abtastratenerhöhung durchgeführt. Weiterhin ist bei dem neuronalen Netz 13 eine Filterübertragungsfunktion mit linearer Phase realisiert. Der Verzerrungsfilter 16 ist optional.

Diese Ausführungsform ist gegenüber den vorigen Ausführungsformen in ihrer Komplexität reduziert, so dass anhand derer das Training des neuronalen Netzes 13 einfach erläutert werden kann.

Für das Training des neuronalen Netzes 13 werden die Signale $y_M(m)$ oder $y_{D,M}(m)$ als Eingangssignale und $\dot{x}(n)$ als gewünschtes Ausgangssignal verwendet.

Beispielsweise für M=2 können für das Training des neuronalen Netzes 13 23 Eingangswerte $y_m(m-11)$, ..., $y_M(m)$, ...$y_M(m+11)$ bzw. $y_{D,M}(m-11)$, ..., $y_{D,M}(m)$, ... $y_{D,M}(m+11)$ und die beiden Ausgangswerte $\dot{x}$ (2·m) und $\dot{x}$(2·m+1) verwendet werden. Eine einfache Netzstruktur dafür ist in Figur 9 dargestellt.

Bei FIR-Filtern ist es auch möglich, eine lineare Phase der Filterübertragungsfunktion zu erzielen. Um diese Eigenschaft auch bei einem neuronalen Netz 13 zu realisieren, muss für die beiden Ausgangswerte $\dot{x}$ (2·m) und $\dot{x}$(2·m+1) (also für die Zeitpunkte $2mT_A$ und $2mT_A+T_A$) jeweils ein separates neuronales Netz trainiert werden. Für die Ausgangswerte $\dot{x}$ (2·m) (Zeitpunkte $2mT_A$) werden 23 Netzparameter und für die Ausgangswerte $\dot{x}$(2·m+1) (Zeitpunkte $2mT_A+T_A$) werden 22 Netzparameter berechnet. Da die Eigenschaft der linearen Phase erzielt werden soll, muss das jeweilige neuronale Netz 13 mit 12 bzw. 11 Netzparametern realisiert werden. Für das erste Netz werden die Eingangswerte $y_M(m+11)-y_M(m-11)$, ..., $y_M(m+1)-y_M(m-1)$, $y_M(m)$, $y_{D,M}(m+11)-y_{D,M}(m-11)$, ..., $y_{D,M}(m+1)-y_{D,M}(m-1)$ verwendet. Die Eingangswerte für das·zweite Netz sind $y_M(m+11)-y_M(m-10)$, ..., $y_M(m+1)-y_M(m)$ ($y_{D,M}(m+11)-y_{D,M}(m-10)$, ..., $y_{D,M}(m+1)-y_{D,M}(m)$. Die beiden neuronale Netze 13 bestehen jeweils aus einem Dense-Layer, wobei die Anzahl der Neuronen der Anzahl der zu berechnenden Netzparametern entspricht. Der Bias wird vor dem Training für alle Neuronen auf Null gesetzt. Figur 10 visualisiert die Netzstruktur für die Ausgangswerte $\dot{x}$ (2·m) (Zeitpunkte $2mT_A$).

Figur 11 zeigt die Netzstruktur für die Ausgangswerte $\dot{x}$(2·m+1) (Zeitpunkte $2mT_A+T_A$).

Durch die Verwirklichung der linearen Phase ist es möglich, die beiden neuronalen Netze bzw. die Netzparameter in einer Filter-Struktur effizient zusammenzuführen. Manche Prozessoren besitzen Sub-Einheiten, die Filter-Strukturen realisieren. Dadurch sind eine effiziente Umsetzung und Berechnung der gewünschten Signale möglich.

Gemäß einer weiteren Variante ist es möglich, Empfangssignale mit einer sin-Funktion (sin $j\cdot(2\cdot\pi\cdot t\cdot\varphi k)$) oder einer e-Funktion ($e^{j\cdot(2\cdot\pi\cdot fk\cdot t\cdot\varphi k)}$) zu modellieren.

Bezugszeichenliste

(1) Codeleser
(2) Lichtstrahl
(3) Sender
(4) Empfänger
(5) Polygonspiegelrad
(6) Strahlteilerspiegel

(7) Barcode
(8) Beleuchtungseinheit
(9) Bildsensor
(10) Objekt
(11) Analog-Digital-Wandler
(12) Abtasterhöhungsmodul
(13) neuronales Netz
(14) Kantendetektionseinheit
(15) Decoder
(16) Verzerrungsfilter

(A) Abtastbereich
(D) Drehachse

## Patentansprüche

1. Codeleser (1) ausgebildet zur Erfassung von Barcodes (7), mit einer eine Lichtstrahlen (2) emittierenden Sendereinheit und einer Empfängereinheit, wobei mit den von der Sendereinheit emittierten Lichtstrahlen (2) wenigstens ein Barcode (7) abgetastet wird und die vom Barcode (7) reflektierten Lichtstrahlen (2) zur Empfängereinheit geführt werden, wobei dadurch generierte Empfangssignale in einer Auswerteeinheit zur Dekodierung des Barcodes (7) ausgewertet werden, **dadurch gekennzeichnet, dass** die Auswerteeinheit wenigstens ein neuronales Netz (13) aufweist, mittels dessen eine Differentiation des Empfangssignals durchgeführt wird, und dass anhand des differenzierten Empfangssignals der Barcode (7) detektiert wird.

2. Codeleser (1) nach Anspruch 1, **dadurch gekennzeichnet, dass** dieser ein Scanner ist, wobei dieser eine Ablenkeinheit aufweist, mittels derer die Lichtstrahlen (2) periodisch innerhalb eines Abtastbereichs (A) geführt sind.

3. Codeleser (1) nach Anspruch 1, **dadurch gekennzeichnet, dass** dieser ein Kamerasensor ist, wobei dieser einen Bildsensor (9) aufweist, der zur Aufnahme von Bildern der Barcodes (7) ausgebildet ist.

4. Codeleser (1) nach einem der Ansprüche 1 bis 3, **dadurch gekennzeichnet, dass** mittels des neuronalen Netzes (13) eine Abtasterhöhung durchgeführt wird.

5. Codeleser (1) nach Anspruch 4, **dadurch gekennzeichnet, dass** das am Ausgang der Empfängereinheit anstehende analoge Empfangssignal in einem Analog-Digital-Wandler (11) digitalisiert wird, und dass die Abtasterhöhung am digitalisierten Empfangssignal durchgeführt wird.

6. Codeleser (1) nach einem der Ansprüche 4 oder 5, **dadurch gekennzeichnet, dass** das neuronale Netz (13) einen Dense-Layer aufweist, und/oder dass dem neuronalen Netz (13) ein Abtasterhöhungsmodul (12) vorgeordnet ist.

7. Codeleser (1) nach Anspruch 6, **dadurch gekennzeichnet, dass** mit dem Abtasterhöhungsmodul (12) eine Abtasterhöhung um den Faktor M bewirkt ist, indem zwischen jeweils zwei aufeinanderfolgenden Abtastwerten des Empfangssignals M-1 Nullen eingefügt werden.

8. Codeleser (1) nach Anspruch 7, **dadurch gekennzeichnet, dass** zur Bestimmung von Parametern des neuronalen Netzes (13) während eines Trainings die Signale am Ausgang des Abtasterhöhungsmoduls (12) als Eingangssignale und die Ableitung dieses Signals als gewünschte Ausgangssignale vorgegeben werden.

9. Codeleser (1) nach Anspruch 8, **dadurch gekennzeichnet, dass** für das Training des neuronalen Netzes (13) die Empfangssignale mit einem Tiefpasssignal beschrieben werden.

10. Codeleser (1) nach Anspruch 9, **dadurch gekennzeichnet, dass** zu dem Tiefpasssignal ein Rauschsignal addiert wird.

11. Codeleser (1) nach einem der Ansprüche 1 bis 10, **dadurch gekennzeichnet, dass** dem neuronalen Netz (13) ein Verzerrungsfilter (16) vorgeordnet ist.

12. Codeleser (1) nach einem der Ansprüche 6 und 11, **dadurch gekennzeichnet, dass** der Verzerrungsfilter (16) dem

neuronalen Netz (13) und dem Abtasterhöhungsmodul (12) vorgeordnet ist.

**13.** Codeleser (1) nach einem der Ansprüche 11 oder 12, **dadurch gekennzeichnet, dass** der Verzerrungsfilter (16) ein Tiefpassfilter ist.

**14.** Codeleser (1) nach einem der Ansprüche 1 bis 13, **dadurch gekennzeichnet, dass** mit dem neuronalen Netz (13) eine Filterübertragungsfunktion mit linearer Phase realisiert wird.

**15.** Codeleser (1) nach einem der Ansprüche 1 bis 14, **dadurch gekennzeichnet, dass** das neuronale Netz (13) in einer Sub-Prozessstruktur realisiert ist.

Fig. 1

5
D
7
2
A
4
6
3

Fig. 2

1
8
9
2
2
7

Fig. 3

1
2
$y_A(t)$
$y_M(m)$
$\tilde{y}(n)$
$\dot{y}(n)$
10
4
11
12
13
14
15
$M \circ T_A$

Fig. 4a

$y_M$ (m)
3000
2500
2000
1500
1000
500
0
m
1095 1096 1097 1098 1099 1100 1101 1102 1103 1104 1105


Fig. 4b

$\tilde{y}$ (n)
3000
2500
2000
1500
1000
500
0
n
2190 2192 2194 2196 2198 2200 2202 2204 2206 2208

# Fig. 5a

$\dot{y}_M(m)$
200
150
100
50
0
-50
-100
-150
-200
m
1070
1075
1080
1085
1090
1095
1100
1105
1110
1115
1105

Fig. 5b

ẏ(n)
200
150
100
50
0
-50
-100
-150
-200
2140 2150 2160 2170 2180 2190 2200 2210 2220 2230 2240
n

Fig. 6

$y_A(t)$
$y_M(m)$
$y_{D,M}(m)$
$\widetilde{y_D}(n)$
$\dot{y}_D(n)$
11
16
12
13
14
15
$M \circ T_A$

Fig. 7

200
150
100
50
0
-50
-100
-150
-200
2140
2150
2160
2170
2180
2190
2200
2210
2220
2230
2240
$\dot{y}_M(m)$
$\dot{y}_D(n)$

Fig. 8

1
yA(t)
yM(m)
yM(m)oder yD,M(m)
ẏ(n) oder ẏD(n)
11
16
13
14
15
M ∘ TA

Fig. 9

| Schicht (Typus) | Ausgangsgröße | Parameter # |
|---|---|---|
| vollständig verbunden (verbunden) | (keine, 2) | 46 |

Parameter gesamt: 46 (184.00 Byte)
trainierbare Parameter: 46 (184.00 Byte)
nicht trainierbare Parameter: 0 (0.00 Byte)

Fig. 10

| Schicht (Typus) | Ausgangsgröße | Parameter # |
|---|---|---|
| vollständig verbunden_1 (verbunden) | (keine, 1) | 12 |

Parameter gesamt: 12 (48.00 Byte)
trainierbare Parameter: 12 (48.00 Byte)
nicht trainierbare Parameter: 0 (0.00 Byte)

Fig. 11

| Schicht (Typus) | Ausgangsgröße | Parameter # |
|---|---|---|
| vollständig verbunden (verbunden) | (keine, 1) | 11 |

Parameter gesamt: 11 (44.00 Byte)
trainierbare Parameter: 11 (44.00 Byte)
nicht trainierbare parameter: 0 (0.00 Byte)

Europäisches
Patentamt
European
Patent Office
Office européen
des brevets

# EUROPÄISCHER RECHERCHENBERICHT

Nummer der Anmeldung
EP 26 15 9238

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 926 519 A1 (LEUZE ELECTRONIC GMBH CO KG [DE]) 22. Dezember 2021 (2021-12-22)<br>* Zusammenfassung *<br>* Absatz [0007] *<br>* Absatz [0016] - Absatz [0020] *<br>* Absatz [0025] *<br>* Absatz [0029] *<br>* Abbildungen 1-3 *<br>----- | 1-15 | INV.<br>G06K7/14<br><br>ADD.<br>G06K7/10 |
| A | EP 4 030 337 A1 (LEUZE ELECTRONIC GMBH CO KG [DE]) 20. Juli 2022 (2022-07-20)<br>* Zusammenfassung *<br>* Absatz [0031] - Absatz [0047] *<br>----- | 1-15 | |
| | | | RECHERCHIERTE SACHGEBIETE (IPC) |
| | | | G06K |

Der vorliegende Recherchenbericht wurde für alle Patentansprüche erstellt

1

| Recherchenort | Abschlußdatum der Recherche | Prüfer |
|---|---|---|
| München | 3. Juli 2026 | Berger, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 26 15 9238

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-07-2026

| Im Recherchenbericht angeführtes Patentdokument | Datum der Veröffentlichung | Mitglied(er) der Patentfamilie | Datum der Veröffentlichung |
|---|---|---|---|
| EP 3926519 A1 | 22-12-2021 | KEINE | |
| EP 4030337 A1 | 20-07-2022 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3312761 B1